# EUROPÄISCHE PATENTSCHRIFT

(11) **EP 0 894 610 B1**
(45) Veröffentlichungstag und Bekanntmachung des Hinweises auf die Patenterteilung: **16.04.2003**
(21) Anmeldenummer: 98112837.4
(22) Anmeldetag: 10.07.1998
(51) Int. Cl.: B29C 51/18, B29C 51/42, B65B 47/04, B65B 3/02

(54) **Einrichtung und Verfahren zur Herstellung von Behältern durch Warmverformung**
Installation and process for manufacturing containers by thermoforming
Installation et procédé de fabrication de récipients par thermoformage

(30) Priorität: 21.07.1997 FR 9709212
(43) Veröffentlichungstag der Anmeldung: 03.02.1999
(73) Patentinhaber: ERCA FORMSEAL, 91940 Les Ulis Cedex (FR)
(72) Erfinder: Michellon, Bernard, 78150 Le Chesnay (FR); Schwab, Dominique, 78000 Versailles (FR); Macquet, Philippe, 91080 Courcouronnes (FR)
(74) Vertreter: Intès, Didier Gérard André

(56) Entgegenhaltungen:
- EP-A- 0 490 399
- DE-C- 830 699
- DE-C- 4 113 568
- GB-A- 2 055 324
- US-A- 3 954 374
- US-A- 3 964 237

## Beschreibung

Die vorliegende Erfindung betrifft eine Einrichtung gemäß dem Oberbegriff des Anspruchs 1 sowie ein Verfahren gemäß dem Oberbegriff des Anspruchs 11, zur Herstellung von Behältern durch Warmformen zum Befüllen dieser Behälter sowie zum Aufsiegeln eines Deckels am Rand jedes Behälters.

Eine solche Einrichtung und ein solches Verfahren sind z.B. aus der US-A-3 964 237 bekannt.

Es sind Einrichtungen zur Herstellung von Behältern durch Warmformen bekannt, die eine Heizstation und eine Warmformstation für Behälter umfassen, die mindestens eine Baugruppe für das Warmformen enthält, die einen Kolben sowie eine Kammer umfaßt, die jeweils zu einem Warmformwerkzeug und einem Warmformgegenwerkzeug gehören, wobei der Kolben und die Kammer dieser Baugruppe einander zugekehrt sind und dieser Kolben dazu geeignet ist, zwischen einer Warmformposition, in der er in diese Kammer eindringt, und einer Auszugsposition, in der er aus dieser Kammer herausgezogen ist, bewegt zu werden, wobei diese Einrichtungen darüber hinaus Transportvorrichtungen enthalten, die dazu geeignet sind, schrittweise zwischen den einzelnen Stationen der Einrichtung vorwärts bewegt zu werden.

Bei den Einrichtungen dieser Art besteht das Material, aus dem der Behälter geformt wird, im allgemeinen aus einem thermoplastischen Folienstreifen, der schrittweise in der Einrichtung vorwärts bewegt wird. Der Streifen wird von Rollen mit sehr großen Abmessungen abgerollt und läuft über Stützrollen, die ihn in der Einrichtung transportieren. Um den Weitertransport des Streifens in der Station wirkungsvoll sicherzustellen, wird dieser Streifen an seinen Rändern über eine Breite von mehreren Millimetern festgehalten, und der Transport findet unter Verwendung dieser Festhalteelemente statt. Hierdurch wird ein ziemlich komplexer Mechanismus für den Transport des Streifens sowie sein Abrollen von der Rolle erforderlich. Darüber hinaus können die Seiten des Streifens, die festgehalten werden, offensichtlich nicht für das Warmfonrien der Behälter verwendet werden, so daß die Ränder des Streifens verlorenes Material darstellen. Insgesamt kann man davon ausgehen, daß je nach Form der Behälter 5 bis 30% der Oberfläche des Streifens verloren sind.

Neben dem Materialverlust, der offensichtlich erhebliche Auswirkungen auf den Herstellungspreis der Behälter hat, bringt die Verwendung eines thermoplastischen Streifens weitere Nachteile mit sich. Insbesondere aufgrund des Rundformens, das den Streifen speziell in der Warmformstation beansprucht, ist es sehr schwierig, eine ausreichende Präzision bei der Positionierung des geformten Behälters im Streifen zu erreichen. Diese fehlende Präzision kann erhebliche Auswirkungen haben, insbesondere, wenn die Einrichtung nicht nur zum Warmformen der Behälter dient, sondern auch zu ihrer Befüllung, zum Aufsiegeln von Deckeln an den Rändern der Behälter sowie zum Schneiden.

So kommt es vor, daß ein mit einem Deckel zu versehender Behälter in der Siegelstation nicht richtig positioniert ist, so daß die Siegellinie falsch plaziert oder in Bezug auf den Rand des Behälters nach innen oder nach außen versetzt ist. Beim Schneiden oder zumindest Vorschneiden des Deckels, das anschließend stattfindet, besteht die Gefahr, die siegellinie zu durchschneiden, so daß der Deckel nicht richtig verschlossen und das in dem Behälter enthaltene Produkt nicht geschützt ist, da der Behälter nicht dicht ist.

Während des Ausschneidens eines Behälters oder einer Serie von Behältern in Bezug auf den oder die benachbarten Behälter aus dem Streifen können das Schneidwerkzeug und die Gegenschneide eine Hebelwirkung erzeugen, wodurch zwischen dem Rand des Behälters und dem auf diesen Rand aufgesiegelten Deckel Scherkräfte ausgeübt werden, die ein solches Ausmaß annehmen können, daß die Dichtheit der Siegelung gefährdet ist, insbesondere, wenn die Siegelung leicht versetzt ist.

Bei herkömmlichen Einrichtungen, die einen Streifen aus thermoplastischem Material verarbeiten, wird versucht, die Warmformkolben so wenig wie möglich voneinander zu distanzieren, um den Materialverlust zu begrenzen. Daher liegen die geformten Behälter sehr nahe beieinander. Diese räumliche Nähe bringt dann erhebliche Schwierigkeiten mit sich, wenn es erforderlich ist, an die Wand der Behälter gelangen zu können, um beispielsweise dort eine Dekoration anzubringen, zum Beispiel ein Etikett, einen Ring oder eine Banderole. Man ist daher bei der Auswahl und bei der Form der Dekoration eingeschränkt, und die Vorrichtungen, mit denen die Dekoration an die Wand der Behälter herangebracht wird, sind kompliziert und kostspielig.

Das französische Patent Nr. 1 468 659 schlägt eine Lösung vor, um zu verhindern, daß der Materialabfall zu groß wird.

Diese Lösung besteht darin, das thermoplastische Material in Form von Pulver oder Granulat in eine Vorform einzuspritzen und dieses Material anschließend zu erwärmen, um einen Rohling zu erhalten. Dieser Formrohling wird anschließend in die verschiedenen Stationen der Einrichtung transportiert. Die Tatsache, daß die untere Wand dieser Form notwendigerweise geschlossen sein muß, macht die anschließenden Arbeitsgänge, die in der Einrichtung vorgenommen werden, kompliziert. Insbesondere ist lediglich ein Arbeiten durch Ansaugen oder durch Blasen möglich, so daß trotz gewisser Vorsichtsmaßnahmen, die in diesem Dokument erwähnt sind, die Gefahr besteht, daß Unregelmäßigkeiten in der Wandstärke des letztendlich erzeugten Behälters entstehen. Darüber hinaus können auf diese Art und Weise lediglich Behälter mit sehr geringer Tiefe hergestellt werden. Diese Technik hat ferner den Nachteil, daß sie nur für geringe Stückzahlen geeignet ist.

Schließlich dient die beschriebene Einrichtung nur zur Herstellung von Behältern, ist jedoch nicht zum Befüllen und Verschließen dieser Behälter geeignet. Die hergestellten bzw. vorgeformten Behälter müssen daher aus der Einrichtung entnommen und zu einer anderen Einrichtung befördert werden, in der sie befüllt und anschließend mit Deckeln verschlossen werden. Es ist allerdings sehr schwierig, die Übergabe an eine Befüll- und Verschließmaschine sicherzustellen und dabei gleichzeitig die erforderlichen Hygienebedingungen einzuhalten, damit die Behälter Nahrungsmittel aufnehmen können, z.B. Milchprodukte.

Es ist weiterhin bekannt (US-A-3,954,374), den Behälter aus vorgefertigten Kunststoffzuschnitten durch Warmformen herzustellen, wobei das einem Tiefziehen gleichkommende Formen in derselben Weise, wie zuvor beschrieben, geschieht. Hierbei läßt sich zwar der Verschnitt minimieren, doch dient dieses Verfahren vornehmlich dazu, den Zuschnitt in einen vorgeformten Behälter anderen Aufbaus als Liner einzuformen.

Die zuvor beschriebenen Nachteile bekannter Vorrichtungen, die mit einem Folienband arbeiten, aus denen die Behälter geformt werden, sind bei der den Oberbegriff des Anspruchs 1 bildenden bekannten Einrichtung gemäß der US-A-3,964,237 teilweise behoben, die zwar mit Zuschnitten für den Behälter arbeitet, bei der aber sämtliche Arbeitsschritte-Tiefziehen des Behälters, Befüllen des geformten Behälters und Auf siegeln des Deckels - auf einem Karussell mit entsprechenden Aufnahmen erfolgt. Die bekannte Einrichtung erlaubt aufgrund der Zwangsführung der Behälter ohne Umsetzungsvorgänge bis zum Befüllen und Aufsiegeln der Deckel ein präzises Arbeiten. Von Nachteil ist jedoch, daß die beim Abfüllen von Nahrungsmitteln zu beachtenden Hygieneanforderungen nur mit aufwendigen Zusatzeinrichtungen erfüllt werden können, weil von der Aufgabe des Plättchenzuschnitts bis zur Füllstation die mit dem Nahrungsmittel in Berührung kommende Oberfläche von oben kontaminiert werden kann und Kontaminationen im tiefgezogenen Behälter kaum mehr mit vertretbarem Aufwand beseitigt werden können. Auch die Stückleistung ist beschränkt, da aus einem Zuschnitt nur jeweils ein Behälter geformt werden kann.

Ausgehend von dem Stand der Technik gemäß dem Oberbegriff des Anspruchs 1 (US-A-3,964,237) liegt der Erfindung die Aufgabe zugrunde, eine Einrichtung zu schaffen, die es ermöglicht, relativ tiefe Behälter zu erhalten, die besonders dazu geeignet sind, eine Flüssigkeit oder ein pastenförmiges Produkt, wie z.B. Joghurt, aufzunehmen und zugleich erhöhte Hygieneanforderungen bei geringem apparativen Aufwand zu erfüllen. Dieses Ziel wird durch eine Einrichtung gemäß dem Anspruch 1 erreicht.

Aufgrund ihrer Anordnungen ermöglicht es die Einrichtung, Plättchen aus thermoplastischem Material zu verwenden, anstatt eines kontinuierlichen Streifens aus thermoplastischem Material. Der erste Förderer wirkt direkt mit den Vorrichtungen zusammen, die es erlauben, das Plättchen zuzuführen, und man vermeidet auf diese Art und Weise den Materialverlust, der an den Rändern eines thermoplastischen Folienstreifens anfällt. Darüber hinaus werden die Plättchen, die im allgemeinen eine Dicke in der Größenordnung von 0,6 bis 1,5mm (z.B. genau 0,8mm) aufweisen, in dem Tragelement gehalten. Die Rundformerscheinungen, die einen thermoplastischen Folienstreifen beeinträchtigen, entstehen nicht. Durch entsprechende Auslegung des Warmformwerkzeugs sowie des Warmformgegenwerkzeugs kann jedes Plättchen verwendet werden, um einen einzigen Behälter zu formen oder um eine Gruppe mit einer bestimmten Anzahl von Behältern zu formen. In jedem Fall ist die Genauigkeit der Positionierung der geformten Behälter in Bezug auf den Förderer größer als bei einer herkömmlichen Einrichtung. Die Scherwirkung, die beim Abschneiden von geformten Behältern aus einem Folienstreifen aus thermoplastischem Material entsteht, tritt hier nicht auf, um so weniger, als es möglich ist, auf eine Schneidstation zu verzichten, indem in jedem Plättchen diejenige Anzahl von Behältern geformt wird, die der Verkaufsverpackung entspricht. Es kommt z.B. häufig vor, daß Produkte, wie z.B. Joghurt, in Behältern verkauft werden, die in Gruppen von vier Behältern zusammengefaßt sind, wobei in diesem Fall vier Behälter in jedem Plättchen geformt werden. In diesem Fall können die Plättchen Vortrennschnitte aufweisen.

Die Möglichkeit, die Behälter so warmzuformen, daß ihre Öffnung nach unten zeigt, ist von besonderer Bedeutung, wenn relativ strenge Hygienemaßstäbe einzuhalten oder die Behälter sogar zu sterilisieren sind. Da nur die Außenflächen der Behälter nach oben weisen, besteht nicht die Gefahr, daß er Staub aus der Umgebungsluft aufnimmt. Der Staub kann sich nicht auf dem Rand der Öffnung und auch nicht im Behälter ablagern, da die Öffnung nach unten weist. Bei den herkömmlichen Einrichtungen ist man zur Vermeidung von Staubablagerungen häufig gezwungen, relativ aufwendige technische Vorrichtungen zu verwenden oder für einen Luftstrom zu sorgen, der dazu geeignet ist, den Staub wegzublasen. Die Anordnung mit der die Einrichtung es erlaubt, die Behälter nach oben zu formen, indem ihre Öffnung nach unten zeigt, ermöglicht es, auf derartig aufwendige Vorrichtungen zu verzichten oder diese zumindest zu vereinfachen.

Erst nach dem Verlassen des ersten Förderers werden die Behälter gewendet und - falls es erforderlich ist, strenge Hygienemaßstäbe einzuhalten - brauchen die zu diesem Zweck bereitgestellten Vorrichtungen nur den Teil der Station besetzen, der sich im Bereich des zweiten Förderers befindet, was die Gesamtkosten der Einrichtung im Vergleich zu solchen Anlagen begrenzt, bei denen Vorrichtungen dieser Art praktisch über die gesamte Länge der Einrichtung vorhanden sind.

Die Tragelemente an den Öffnungen des ersten Förderers enthalten vorteilhafterweise Vorrichtungen, um die auf diesen Tragelementen liegenden Plättchen festzuhalten. Diese Festhaltevorrichtungen, die z.B. aus einem Rand mit einer Form bestehen, die an die Kontur der Plättchen angepaßt ist, ermöglichen es, die Plättchen während der unterschiedlichen Arbeitsgänge besser festzuhalten, insbesondere während des Warmformens.

Die Heizstation enthält vorteilhafterweise Vorrichtungen, um Randbereiche der Plättchen auf einer Temperatur zu halten, die unter der Temperatur der plastischen Verformung liegt.

Das Vorhandensein solcher Vorrichtungen ist vorteilhaft, weil die Randbereiche der Plättchen eine ausreichende Festigkeit beibehalten, damit es möglich ist, die Plättchen während des Warmformens festzuhalten, z.B. indem diese Randbereiche geklemmt werden. Die kalten Randbereiche werden bei der Warmformung nicht verformt und dienen dazu, den Rand der Behälter zu bilden der eine Dicke aufweisen kann, die geringfügig über der üblichen Wandstärke der Behälter liegt.

Die Erfindung bezieht sich ebenfalls auf ein Verfahren zur Herstellung von Behältern durch Warmformen , indem eine Erwärmungsphase sowie eine Warmformphase der Behälter mit Hilfe von mindestens einer Warmformbaugruppe realisiert wird, die eine Warmformkammer sowie einen Warmformkolben enthält, wobei der Kolben zwischen einer Auszugsposition, in der er aus der Kammer entfernt wird, und einer Warmformposition, in der er in diese Kammer eindringt, bewegt wird, und Transportvorrichtungen verwendet werden, die dazu geeignet sind, schrittweise fortbewegt zu werden.

Bei den herkömmlichen Verfahren dieser Art, bei denen die Warmformgebung mit Hilfe von Kolben vorgenommen wird, die in die Warmformkammern eindringen, werden die Behälter aus einem thermoplastischen Folienstreifen geformt, der schrittweise in der Einrichtung vorwärts bewegt wird. Die Verwendung dieser Streifen bringt die weiter oben genannten Nachteile, insbesondere den erheblichen Verlust an thermoplastischem Material, sowie die Probleme mit der Positioniergenauigkeit und der Dichtheit der Behälter mit sich.

Diese Nachteile werden bei dem Verfahren nach der US-A-3,964,237 dadurch vermieden, daß mindestens ein Förderer mit Öffnungen und an deren Rändern angeordneten Tragelementen verwendet wird, Plättchen aus thermoplastischem Material auf diesen Tragelementen und auf diesen Öffnungen abgelegt und daraufhin erwärmt werden, um mindestens einen Zentralbereich jedes Plättchens auf eine Temperatur zur plastischen Formgebung zu bringen, indem eine mit einem Plättchen belegte Öffnung des Förderers zwischen der Kammer und dem Kolben jeder Warmformbaugruppe eingebracht und der Kolben jeder Warmformbaugruppe durch die entsprechende Öffnung des Förderers bewegt wird, um das an dieser Öffnung vorhandene Plättchen umzuformen und in die entsprechende Warmformkammer einzuführen. Indes genügt dieses Verfahren dann nicht der Praxis, wenn erhöhte Hygieneanforderungen gestellt werden.

Ausgehend vom Stand der Tecknik gemäß dem Oberbegriff des unabhängigen Anspruchs 11 (US-A-3 964 237) hat die Erfindung das Ziel, ein verbessertes Verfahren vorzuschlagen, das es ermöglicht, diese Nachteile zu vermeiden oder zumindest zu begrenzen und zugleich mit der Warmformgebung mit Hilfe von Warmformkolben kompatibel zu bleiben.

Dieses Ziel wird dadurch erreicht, daß während der Warmformphase der bzw. jeder Warmformkolben nach oben bewegt wird, um in die entsprechende Warmformkammer einzudringen und Behälter mit nach unten weisender Öffnung hergestellt werden, und daß zwischen der Warmformphase und einer Füllphase eine Phase vorgesehen wird, in der die Behälter gewendet werden, so daß ihre Öffnungen nach oben weisen.

Dieses Warmformen nach oben erlaubt es, die Öffnung der Behälter nach unten weisen zu lassen, so daß das Risiko von Staubablagerungen auf dem Rand sowie im Innern der Behälter vermieden wird.

Nach der Wendephase können die Behälter auf herkömmliche Art und Weise befüllt und anschließend Deckel auf den Rändern der Behälter abgelegt und aufgesiegelt werden. Insgesamt gesehen muß lediglich von der Wendephase bis zur Dekkelablagephase darauf geachtet werden, daß hygienische oder sterile Bedingungen eingehalten werden.

Um die Plättchen auf den Tragelementen abzulegen, wird eine Zuführphase durchlaufen, in der mindestens ein thermoplastisches Plättchen aus einer Gruppe von thermoplastischen Plättchen ausgesondert wird und das bzw. jedes ausgesonderte Plättchen auf einem Tragelement des ersten Förderers abgelegt wird.

Während der Erwärmungsphase werden die Randbereiche der Plättchen vorteilhafterweise auf einer Temperatur gehalten, die unter der Temperatur für das plastische Umformen liegt.

Bei Beachtung dieser Vorsichtsmaßnahme ist gewährleistet, daß die Randbereiche der Plättchen fest bleiben und sich plastisch nicht verformen, wenn sie die Erwärmungsstation verlassen, wodurch es möglich wird, insbesondere bei der Warmformgebung die Plättchen an diesen Randbereichen festzuhalten, z.B. durch Klemmen.

Die Erfindung und ihre Vorteile werden durch die nachfolgende ausführliche Beschreibung von Ausführungsformen erläutert, die beispielhaft aber nicht erschöpfend dargestellt sind.

Die Beschreibung bezieht sich auf die als Anlage beigefügten Zeichnungen. Hierbei zeigen
- Abbildung 1 eine schematische Seitenansicht einer Einrichtung entsprechend der Erfindung in einer ersten Ausführungsart
- Abbildung 2 eine Ansicht von oben auf die Einrichtung der Abbildung 1
- Abbildung 3 eine schematische Ansicht, die die Funktionsweise der Zuführstation zeigt,
- Abbildung 4 einen Schnitt entlang der Linie IV-IV der Abbildung 2 an der Heizstation,
- Abbildung 5 eine schematische Darstellung der Warmformstation und ihrer Funktionsweise,
- Abbildungen 6, 7 und 8 schematische Darstellungen der Funktionsweise der Vorrichtungen für die Übergabe der Behälter vom ersten zum zweiten Förderer und
- Abbildung 9 eine schematische Ansicht von oben auf eine Einrichtung entsprechend der Erfindung in einer weiteren Ausführungsform

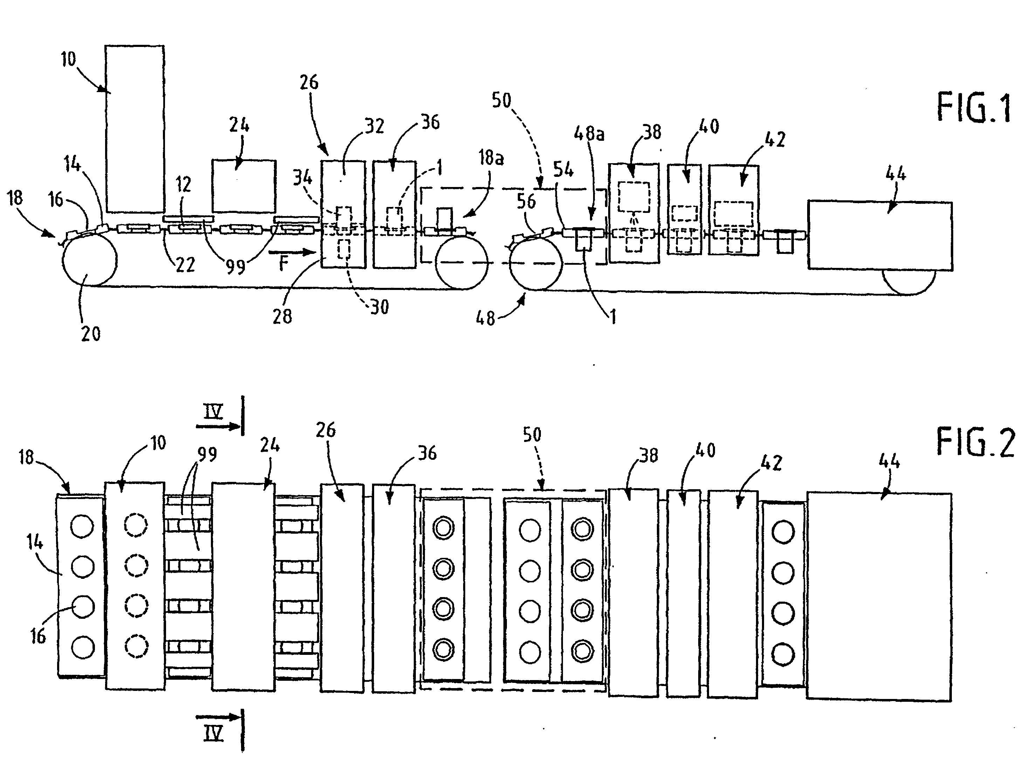

Die in Abbildungen 1 und 2 dargestellte Einrichtung besteht aus einer Zuführstation 10, die es erlaubt, die Plättchen 12 aus thermoplastischem Material auf Tragelementen 14 abzulegen, die sich entlang von Öffnungen 16 befinden, die an einem Förderer 18 angeordnet sind, der nachstehend als erster Förderer bezeichnet ist.

Zur Vereinfachung ist dieser erste Förderer nur teilweise dargestellt. Man kann sich als Beispiel vorstellen, daß er einen Rollgurt enthält, der von Antriebsrollen 20 bewegt wird. Die Tragelemente 14 bestehen z.B. aus Platten, die quer zur Vorschubrichtung des Rollgurts angeordnet sind, wobei die Öffnungen 16 in Reihen angeordnet sind, um die Behälter als Behälterreihen herzustellen. Die Platten 14 sind untereinander durch Verbindungselemente 22 verbunden, z.B. flexible Bänder oder Gelenke bildende Elemente, die die Flexibilität des Rollgurts für seinen Transport auf den Rollen 20 sicherstellen.

Die Einrichtung enthält ferner eine Heizstation 24, die dazu dient, die Plättchen 12 während ihres Durchgangs durch diese Station zu erwärmen, wobei sich diese Station über mehrere Vorschubschritte des ersten Förderers erstrecken kann. Die Einrichtung enthält weiterhin eine Warmformstation 26, in der Behälter mit Hilfe eines Warmformwerkzeuges 28 geformt werden, welche Warmformkolben 30 enthält, die in Reihen angeordnet sind, wobei jede Reihe so viele Kolben enthält, wie eine Reihe Öffnungen 16 aufweist, sowie ein Warmformgegenwerkzeug 32, das Warmformkammern 34 enthält, die ebenfalls in Reihen angeordnet sind, wobei jede Kammer einem Kolben 30 korrespondiert.

Unterhalb der Warmformstation 26 in Richtung F des Vorschubs des ersten Förderers 18 enthält die Einrichtung weiterhin eine Station 36, die dazu dient, den Rumpf der Behälter zu dekorieren. Diese Station kann vorteilhafterweise eine tamriongraphische Station sein, die Vorrichtungen enthält, um auf den Behältern durch Tampondruck (Stempeldruck) eine Dekoration anzubringen. Es kann auch eine Ummantelungsstation sein, die Vorrichtungen enthält, die um jeden Behälter 1 eine thermoschrumpfende Ummantelung anbringt, sowie Vorrichtungen, um die Temperatur dieser Ummantelungen zu verändern und sie auf diese Art und Weise auf die Behälter zu schrumpfen. Die Ummantelungen werden aus einer Umhüllung hergestellt, die auf dem Gehäuse der Behälter angebracht und in der gewünschten Höhe abgeschnitten wird. Im allgemeinen können die Ummantelungen unter Wirkung der Wärme geschrumpft werden, und die zu diesem Zweck vorgesehenen Vorrichtungen enthalten als Beispiel Vorrichtungen, um einen warmen Luftstrom um die Behälter herum zu erzeugen.

Wie man auf den Abbildungen 1 und 2 sieht, können die Behälter oder Gruppen, die wenige Behälter enthalten, dank der Tatsache, daß die Behälter 1 aus ausgesonderten Plättchen 12 hergestellt werden, während ihrer Herstellung voneinander entfernt werden, was es leichter ermöglicht, die thermoschrumpfenden Ummantelungen auf dem Rumpf der Behälter anzubringen. Die Verwendung von thermoschrumpfenden Ummantelungen ist besonders interessant, insbesondere wenn das Gehäuse der Behälter nicht zylindrisch ist, sondern Querschnittsveränderungen aufweist.

Die in den Abbildungen 1 und 2 dargestellte Einrichtung dient nicht nur zur Herstellung von Behältern, sondern auch direkt zu ihrer Befüllung, zum Aufsetzen von Deckeln und zum Auf siegeln dieser Deckel auf den Rändern der Behälter. Aus diesem Grunde enthält diese Einrichtung unterhalb der Warmformstation (oder, soweit vorhanden, unterhalb der Dekorationsstation 36 ) eine Station 38 zur Befüllung der Behälter, eine Station 40 zum Aufsetzen von Deckeln auf den Rändern der Behälter sowie eine Station 42 zum Aufsiegeln dieser Deckel auf den Behältern. Unterhalb der Station 42 enthält die Einrichtung weiterhin eine Ausgabestation 44, in der die befüllten und verschlossenen Behälter von den Förderern entfernt werden, bevor sie für den Verkauf verpackt werden. Deckel können auch (mit Hilfe von nicht dargestellten Vorrichtungen) zwischen den Stationen 42 und 44 angebracht werden.

In der in den Abbildungen 1 und 2 dargestellten Einrichtung werden die Behälter nach oben zeigend geformt, das heißt, daß sich die Warmformwerkzeuge, die die Warmformkolben enthalten, unter dem ersten Förderer 18 befinden, während dieser durch die Warmformstation 28 befördert wird, während die Warmformkammern 34 darüber angeordnet und nach unten offen sind.

Aus diesem Grunde zeigen die Öffnungen nach unten, sobald die Behälter geformt sind, während die Behälter in den Stationen 38 bis 42 gewendet werden und ihre Öffnungen dann nach oben zeigen. Die Einrichtung enthält Vorrichtungen 50, um die Behälter zwischen der Warmformstation 26 und der Befüllstation 38 zu wenden. Genauer gesagt enthalten die Transportvorrichtungen außer dem ersten Förderer 18 einen zweiten Förderer 48, der durch die Stationen 38 bis 42 läuft und auf dem die Behälter gewendet sind, wobei ihre Öffnungen nach oben zeigen. Der zweite Förderer 48 bewegt sich schrittweise synchron mit der Vorwärtsbewegung des ersten Förderers 18.

In dem dargestellten Beispiel ist der Aufbau analog zu dem des ersten Förderers, da er ebenfalls Tragelemente 54 aufweist, die sich entlang der Öffnungen 56 befinden, wobei die Behälter 1 auf den Tragelementen 54 so angeordnet sind, daß ihr Rumpf die Öffnungen passiert und ihr Rand von den Tragelementen abgestützt wird. Die Vorrichtungen 50, die sich in einer Übergabe- und Wendestation befinden, die zwischen dem ersten und dem zweiten Förderer 18 und 48 angeordnet sind, dienen dazu, die Behälter vom ersten Förderer 18 auf den zweiten Förderer 48 zu übergeben und diese Behälter während dieses Transfers zu wenden. Der Aufbau wird nachstehend näher erläutert.

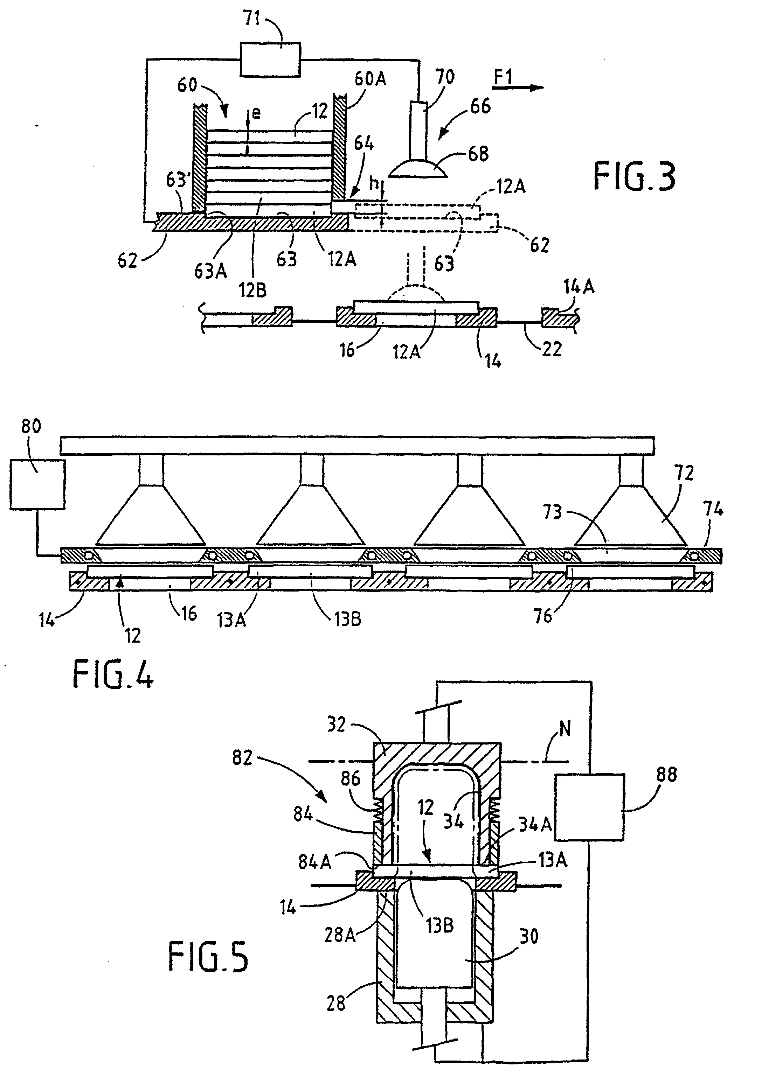

Die Abbildung 3 erlaubt es, die Konfiguration und die Funktionsweise der Zuführstation 10 zu erklären. Sie enthält ein Magazin 60, das dazu geeignet ist, mindestens einen Stapel von Plättchen 12 aufzunehmen, und dessen unteres Ende mit einer Schublade 62 ausgestattet ist. Diese Schublade weist einen Aufnahmebereich 63 für das untere Plättchen des Stapels 12A auf. Wenn sich die Zuführstation in der Einrichtung der Abbildungen 1 und 2 befindet, wird sie an dem einen Ende des Förderers 18 in den Bereich oberhalb des letzteren plaziert.

Das Magazin dient dazu, so viele Plättchenstapel aufzunehmen, wie jede Öffnungsreihe 16 der Tragelemente 14 Öffnungen enthält, und die Schublade 62 enthält eine entsprechende Anzahl von Aufnahmebereichen 63. Diese Schublade kann sich zwischen einer eingefahrenen Position, die in der Abbildung 3 durch eine durchgezogene Linie dargestellt ist und in der sich der Aufnahmebereich 63 unter dem Plättchenstapel befindet und effektiv das untere Plättchen 12A aufnimmt, und einer weiter vorn liegenden Position bewegen, die durch eine gestrichelte Linie dargestellt ist und in der sich dieser Aufnahmebereich 63 außerhalb des Magazins 60 befindet und auf diese Art und Weise das Plättchen 12A, das sich im Aufnahmebereich 63 befand, aus dem Magazin entnimmt, wobei das Plättchen 12B des Stapels, das sich unmittelbar über dem Plättchen 12A befand, durch den Teil 63' der Schublade, der sich hinter dem Aufnahmebereich 63 befindet, im Magazin festgehalten wird.

Um es zu ermöglichen, daß lediglich das untere Plättchen 12A während der Vorwärtsbewegung der Schublade 62 aus dem Magazin genommen wird, ist eine Öffnung 64 zwischen der Schublade 62 und der vorderen Wand 60A des Magazins 60 definiert. Die Vordere Wand 60A stellt diejenige Wand der Magazinwände dar, die sich vorne im Magazin in Richtung F1 der Bewegung der Schublade zwischen ihrer zurückgefahrenen Position und ihrer ausgefahrenen Position befindet. Diese Öffnung 64 ist dazu geeignet, bei der Bewegung der Schublade in Richtung F1 lediglich das untere Plättchen des Stapels passieren zu lassen. Genauer gesagt ist sie so ausgelegt, daß sie während der Vorwärtsbewegung der Schublade das Plättchen 12B sowie alle Plättchen, die sich darüber befinden, festhält. In dem dargestellten Beispiel ist der Aufnahmebereich 63 tatsächlich als Vertiefung an der Oberseite der Schublade 62 ausgelegt, und die Höhe h der Öffnung 64, die zwischen dem unteren Ende der vorderen Wand 60A und dem gleitenden Teil der oberen Seite der Schublade 62 definiert ist (deren Höhe die gleiche ist, wie die Höhe ihrer Rückseite 63'), ist geringer, als die Dicke eines Plättchens. Der hintere Teil des Aufnahmebereiches 63 ist mit einer Stufe 63A versehen, die einen Übergang in Bezug auf den hinteren Bereich 63' der oberen Seite der Schublade bildet, wobei diese Stufe es ermöglicht, das Plättchen 12A bei der Vorwärtsbewegung der Schublade mitzunehmen.

Die Schublade 62 wird bis zu einer Position vorwärts bewegt, in der sich das Plättchen 12A, das in ihr enthalten ist, über einem Tragelement 14 des ersten Förderers 18 befindet. Wenn die Schublade diese Position einnimmt, werden Vorrichtungen 66 zum Ergreifen des Plättchens 12A eingesetzt. Sie enthalten als Beispiel eine Saugvorrichtung 68, in der durch eine Venturi-Wirkung ein geringer Unterdruck erzeugt werden kann, wobei diese Saugvorrichtung dazu geeignet ist, das Plättchen an seiner oberen Seite zu ergreifen, sowie eine Hubvorrichtung 70, die dazu geeignet ist, die Saugvorrichtung abzusenken, um es ihr zu ermöglichen, das Plättchen 12A zu ergreifen und die Baugruppe, die aus dem Plättchen und der Saugvorrichtung besteht, die das Plättchen enthält, wieder anzuheben, um es der Schublade zu erlauben, wieder ihre eingefahrene Position einzunehmen. Wenn die Schublade diese Position eingenommen hat, senkt die Hubvorrichtung 70 anschließend die Saugvorrichtung ab, um das Plättchen 12 auf einer Öffnung 16 des Tragelementes 14 abzulegen, wobei der Unterdruck in dieser Position deaktiviert wird, um es der Saugvorrichtung zu ermöglichen, das Plättchen freizugeben und die Hubvorrichtung 70 wird anschließend betätigt, um die Saugvorrichtung in ihre obere Position zurückzubewegen. Die Schublade 62 sowie die Hubvorrichtung 70 ebenso wie die Vorrichtungen, um den Unterdruck in der Saugvorrichtung 68 zu erzeugen, funktionieren selbstverständlich synchron mit Hilfe eines Synchronisierungssystems 71. Diese System läuft ebenfalls synchron mit der schrittweisen Vorwärtsbewegung des ersten Transportelementes 18.

Auf der Abbildung 3 ist zu erkennen, daß die Tragelemente 14 eine Trennvorrichtung enthalten, die um jede Öffnung 16 einen Rand bildet. Die Kontur dieser Trennvorrichtung bildet einen Vorsprung 14A, der eine zusätzliche Form zur äußeren Form der Plättchen 12A definiert und ebenfalls dazu dient, diese festzuhalten. Selbstverständlich können auch andere Festhaltevorrichtungen vorgesehen werden, z.B. Festhaltekontakte oder sonstige Vorrichtungen.

Die Abbildung 4 zeigt in schematischer Art und Weise die Anordnung der Heizstation 24. Der Schnitt dieser Abbildung ist quer zur Richtung der Vorwärtsbewegung des Förderers dargestellt, so daß man eine Plättchenreihe 12 erkennt, die auf den Tragelementen 14 angeordnet sind, die eine Öffnungsreihe 16 umgeben. Die Plättchen 12 der Reihe werden mit Hilfe von Heizvorrichtungen aufgewärmt, die zum Beispiel aus einer Reihe mit Infrarotlampen 72 bestehen. Vorzugsweise enthält diese Heizstation Vorrichtungen, um Randbereiche 13A der Plättchen 12 auf einer Temperatur zu halten, die unter der Temperatur für eine plastische Verformung liegt, bei der das Material, aus dem die Plättchen bestehen, plastisch verformbar ist. So ist auf der Abbildung 4 zu erkennen, daß für jedes Plättchen 12, das sich in der Heizstation befindet, bei einem bestimmten Vorschub des Förderers diese Station eine Abdeckvorrichtung 74 enthält, die dazu geeignet ist, den peripheren Bereich 13A des entsprechenden Plättchens gegenüber dem Heizvorrichtungen zu schützen und auf diese Art und Weise dafür zu sorgen, daß lediglich der zentrale Bereich 13B des Plättchens auf die Temperatur zum plastischen Verformen gebracht wird. Die Abdeckvorrichtungen 74 sind z.B. aus einer einzigen Platte hergestellt, die mit Öffnungen versehen ist, deren Abmessungen geringer sind als die äußeren Abmessungen der Plättchen, so daß die Kanten dieser Öffnungen die peripheren Bereiche 13A schützen.

Vorteilhafterweise enthält die Einrichtung Vorrichtungen, um die Abdeckvorrichtungen 74 zu kühlen. So ist im Schnitt der Abbildung 4 zu erkennen, daß die Ränder der Öffnungen 73 der Abdeckvorrichtungen 74 mit Kanälen 76 versehen sind, in denen ein Kühlflüssigkeitskreislauf aufrechterhalten werden kann.

Vorteilhafterweise können die Abdeckvorrichtungen (die Platte, die sie enthält) leicht angehoben werden, um sich leicht vom Förderer 18 zu entfernen und die Vorwärtsbewegung dieses Förderers zu ermöglichen, der die Plättchen enthält, und anschließend abgesenkt werden, um die Randbereiche der Plättchen während deren Erwärmung wirksam zu schützen. Zu diesem Zweck enthält die Einrichtung Steuervorrichtungen für die Abdeckvorrichtungen 80, die synchron mit der Vorwärtsbewegung des Förderers wirken.

Die gekühlten Abdeckvorrichtungen befinden sich vorteilhafterweise in Kontakt mit den Randbereichen 13A der Plättchen, so daß sie nicht nur verhindern, daß diese den Heizvorrichtungen ausgesetzt sind, sondern auch, daß sie nicht Gefahr laufen, aufgrund der Wärmeleitung in dem Material, aus dem die Plättchen bestehen, dennoch eine relativ hohe Temperatur zu erreichen.

Es können auch andere Heizvorrichtungen als Infrarotlampen verwendet werden. Man kann z.B. ein Aufwärmen durch Kontakt vornehmen, indem die Heizeinsätze mit Abmessungen verwendet werden, die dazu geeignet sind, in die Öffnungen 73 der Abdeckvorrichtungen einzugreifen, um in Kontakt mit den Plättchen 12 zu gelangen. Man kann obere und untere Heizeinsätze verwenden, wobei der untere Einsatz eine Form aufweist, die dazu geeignet ist, in die Öffnungen 16 des Tragelementes 14 einzugreifen, um mit den Unterseiten der Plättchen 12 zusammenzuwirken.

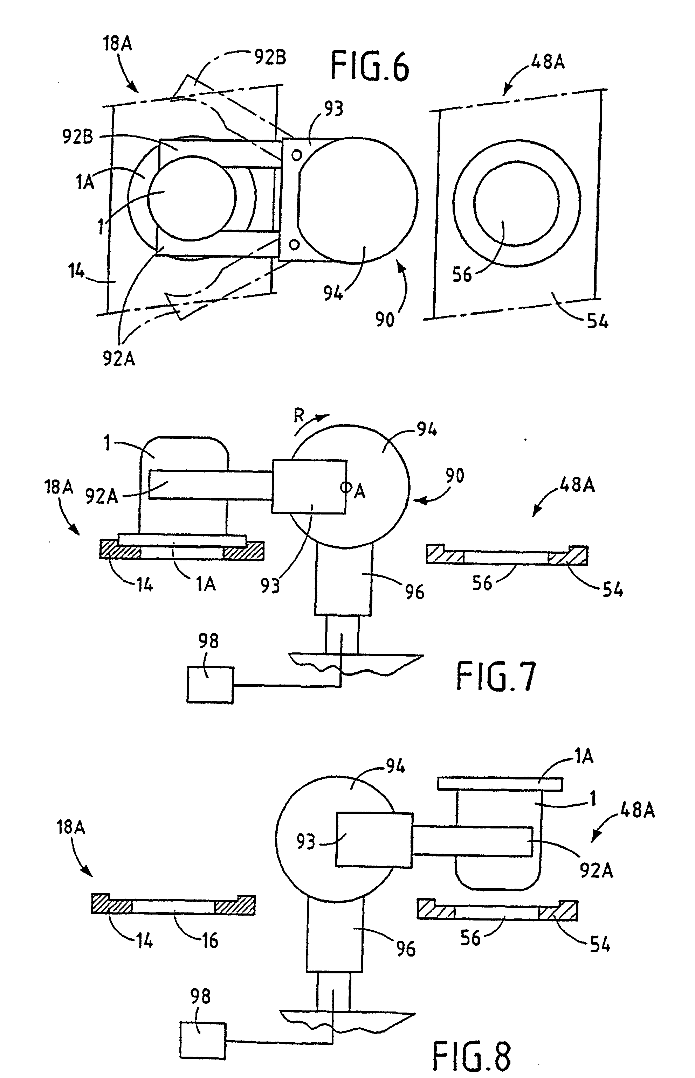

Die Abbildung 5 zeigt eine Baugruppe aus einem Kolben 30 0 und einer Warmformkammer 34, die jeweils zum Warmformwerkzeug 28 und zum Warmformgegenwerkzeug 32 gehören. In der Einrichtung der Abbildungen 1 und 2 sind die Kolben 30 und die Kammer 34 in Reihen angeordnet, und zwar in einer Anzahl, die der Anzahl der Öffnungen 16 des Förderers pro Reihe entspricht. In der Warmformstation 26 können mehrerer Kolben- und Kammerreihen vorhanden sein.

Das Warmformwerkzeug 28 wird unter der Vorschubbahn des Förderers 18 in der Warmformstation plaziert. Das Werkzeug 28 sowie das Gegenwerkzeug 32 sind beide vertikal verschiebbar. Daher können sie in Bezug auf die in der Abbildung 5 dargestellte Situation voneinander entfernt werden, um die Vorwärtsbewegung des Förderers zu ermöglichen mit dem Ziel, ein Tragelement 14, das mit einem Plättchen 12 versehen ist, zwischen dem Kolben 30 und der Kammer 34 einer jeden Warmformbaugruppe zu plazieren. Um diesen Warmformvorgang durchzuführen, wird das Plättchen 12 am Tragelement an seinem Platz festgehalten. Genauer gesagt wirkt das obere Ende 28A des Zylinders, in dem sich der Kolben 30 bewegt, gegen die Innenseite des Tragelementes 14A um die Öffnung 16 herum, während das untere Ende 34A der Wand der Kammer 34 mit der oberen Seite des Randbereiches 13A der Plättchen zusammenwirkt.

Die Baugruppe, die aus dem Tragelement 14 besteht, das mit dem Plättchen ausgestattet ist, wird folglich zwischen dem oberen Ende 28A des Zylinders des Kolbens 30 und dem unteren Ende 34A der Wand der Kammer 34 festgehalten. Das Plättchen wird daher vollkommen festgehalten, und das Warmformen kann ohne Schwierigkeiten vorgenommen werden. Zu diesem Zweck wird der zentrale Teil 13B des Plättchens auf die Temperatur zur plastischen Verformung gebracht und der Kolben 30 vertikal nach oben bewegt, so daß er in die Kammer 34 eindringen und den zentralen Bereich des Plättchens umformen kann.

Gleichzeitig oder gegen Ende der Phase der Bewegung des Kolbens nach oben kann Luft durch diesen letzteren eingeblasen werden, um den verformten Teil des Plättchens wirkungsvoll gegen die Wand der Kammer 34 zu legen. Der auf diese Art und Weise geformte Behälter ist in der Abbildung 5 durch eine strichpunktierte Linie dargestellt, und man sieht, daß der Rumpf dieses Behälters sich an die Wand der Kammer 34 schmiegt, während der Rand des Behälters, der entlang der Öffnung dieses Behälters verläuft, durch den Bereich 13A gebildet wird, der nicht auf die Temperatur zur plastischen Verformung des Plättchens gebracht wird.

Zum Herausnehmen der Behälter aus der Form fährt der Kolben 30 in seinem Zylinder wieder in seine untere Position zurück, und das Warmformwerkzeug 32 wird nach oben bis zu einer Höhe N bewegt, in der sich die unteren Enden 34A über dem Boden der Behälter befinden.

Um das Herausnehmen zu erleichtern und um zu vermeiden, daß die Behälter mit dem Warmformgegenwerkzeug nach oben mitgenommen werden, wenn dieses sich wieder nach oben bewegt, wird dieses Werkzeug vorteilhafterweise mit Abstreifern 82 ausgestattet, die den Behälter ganz zu Anfang der Aufwärtsbewegung des Warmformgegenwerkzeugs in das Tragelement drücken, wodurch der Rumpf des Behälters von der Wand der Kammer 34 abgehoben wird. Im hier dargestellten Beispiel enthalten die Abstreifer 82 für jede Kammer 34 eine Festhaltevorrichtung 84, deren unteres Ende 84A dazu geeignet ist, mit der oberen Seite des Randbereiches 13A des Plättchens 12 zusammenzuwirken, ebenso wie das untere Ende 34A der Kammer, wie weiter oben erwähnt. Die Festhaltevorrichtung 84 ist fest mit dem Warmformgegenwerkzeug verbunden, aber an diesem mit elastischen Vorrichtungen, z.B. Federn 86 abgestützt. Im entspannten Zustand dieser Feder befindet sich das untere Ende 84A auf einer horizontalen Höhe, das unter der Höhe des unteren Endes 34A der Kammer liegt. Während des Warmformens werden die Federn 86 zusammengedrückt gehalten. Während sich das Warmformgegenwerkzeug jedoch wieder nach oben bewegt, entspannen sich diese Federn wieder, so daß das untere Ende 84A der Festhaltevorrichtung 84 weiterhin die Kanten der Plättchen gegen die Tragelemente 14 drückt, während gleichzeitig das Warmformgegenwerkzeug damit begonnen hat, sich wieder nach oben zu bewegen. Für jede Warmformkammer können die Festhaltevorrichtungen in Form von Kontaktvorrichtungen ausgelegt sein, die sich außerhalb der Kammer befinden und mit Hilfe von Federn festgehalten werden. Sie können ebenfalls aus einem ringförmigen Kranz bestehen, der auf der Feder angebracht ist.

Die Bewegungen des Warmformwerkzeugs 28 und des Warmformgegenwerkzeugs 32 sowie die Bewegung des Kolbens 30 verlaufen synchron mit der Vorwärtsbewegung des Förderers 18. Zu diesem Zweck sind Synchronisierungsvorrichtungen 88 vorgesehen.

Unter Bezugnahme auf die Abbildungen 6 bis 8 wird jetzt die Funktionsweise der Übergabe- und Wendestation 50 beschrieben, die zwischen den Förderern 18 und 48 angeordnet ist. In dieser Station werden die Behälter übergeben und wieder gewendet, und zwar von einem Abgabebereich 18A des ersten Förderers 18 und auf einen Aufgabebereich 48A des zweiten Förderers 48. Die Übergabe- und Wendestation 50 enthält so viele Übergabe- und Wendevorrichtungen, wie Behälter im Abgabebereich 18A des ersten Förderers bei einer Vorwärtsbewegung vorhanden sind.

In der in den Abbildungen 1 und 2 in beispielhafter Form dargestellten Einrichtung wird eine Reihe mit vier Behältern bei jeder Vorwärtsbewegung des Förderers 18 gleichzeitig bearbeitet. Der Abgabebereich 18A dieses Förderers enthält ebenfalls eine Reihe mit vier Behältern, und die Übergabe- und Wendestation kann somit vier Übergabe- und Wendevorrichtungen enthalten.

Der Aufbau dieser beschriebenen und in den Abbildungen 6 bis 7 dargestellten Vorrichtungen erlaubt es in der Station 50 eine Reihe von Behältern gleichzeitig zu handhaben. Zur Vereinfachung ist in der Abbildung 6 nur eine einzige Übergabe- und Wendevorrichtung 90 dargestellt, die einen Behälter 1 im Abgabebereich 18A des ersten Förderers 18 zu dem Zweck ergreift, ihn zu wenden und ihn in den Aufgabebereich 48A des zweiten Förderers zu übergeben. Diese Vorrichtung 90 enthält Greifvorrichtungen, die dazu geeignet sind, aktiviert zu werden, um einen Behälter im Abgabebereich 18 des ersten Förderers zu ergreifen, wie auf der Abbildung 6 zu sehen ist, und anschließend verschoben zu werden, wie durch den Pfeil R in der Abbildung 7 dargestellt, um einen Behälter 1 aufzunehmen, der in der Nähe des Aufgabebereichs 48A des zweiten Förderers ergriffen wurde, indem die in der Abbildung 8 dargestellte Position eingenommen wird und die Vorrichtung von dieser Position aus deaktiviert wird, um die Aufnahme des Behälters durch den zweiten Teil des Förderers zu ermöglichen.

Genauer gesagt bestehen bei der in den Abbildungen 6 bis 8 dargestellten Vorrichtung 90 die Greifvorrichtungen aus den beiden Fingern 92A und 92B einer Zange, und die Vorrichtung 90 wird anfänglich in eine Wartestellung gebracht, in der die Finger 92A und 92B, wie in der Abbildung 6 durch eine strichpunktierte Linie dargestellt, voneinander entfernt werden, um die Vorwärtsbewegung des ersten Förderers 18 sowie die Bereitstellung eines Behälters 1 oder besser einer Reihe von Behältern im Ausgangsbereich 18A zu ermöglichen. Anschließend werden die Arme der Zange wieder zueinander bewegt, um den Behälter 1 an seiner seitlichen Wand zu ergreifen, wie durch die durchgezogene Linie in der Abbildung 6 und in der Abbildung 7 dargestellt. Die Enden der Finger 92A und 92B sind drehbar angebracht (um eine Achse, die in den in den Abbildungen dargestellten Positionen vertikal verläuft), und zwar auf einer Platte 93, die selbst mit einem drehbaren Kopf 94 fest verbunden ist.

Aus der in der Abbildung 7 dargestellten Position heraus wird die Zange so bewegt, daß der Behälter 1 zurückgeführt wird. Wenn die Zange z.B. genau zwischen die Bereiche 18A und 48A positioniert wird, können die Vorrichtungen zum Bewegen der Zange einfach die Funktion besitzen, den Kopf 94 um eine horizontale Achse A quer zur Vorschubrichtung des ersten und des zweiten Transportelementes um ungefähr eine halbe Umdrehung zu drehen. Nach dieser Drehbewegung wird der Behälter 1 zurückgeführt und über einen Aufnahmebereich des zweiten Förderers 48 positioniert, der sich selbst im Aufgabebereich 48A dieses zweiten Förderers befindet.

Der Drehkopf 94 kann gegebenenfalls auf einer Hubvorrichtung 96 positioniert werden, die es erlaubt, ihn anzuheben, um den Behälter aus den Tragelementen 14 im Abgabebereich 18A des ersten Förderers zu lösen, und den Drehkopf abzusenken, um den Boden der Behälter in den entsprechenden Aufnahmebereichen des zweiten Förderers festzuhalten.

Die Übergabe- und Wendevorrichtung 90 wird mit Hilfe von Steuerelementen 98 betätigt, die synchron zur Vorwärtsbewegung der Transportelemente 18 und 48 funktionieren. Die Aufnahmebereiche für die Behälter, die sich am zweiten Förderer 48 befinden, können einen Aufbau analog zum Tragelement 14 aufweisen und aus Tragelementen 54 bestehen, die sich am Rande von Öffnungen 56 befinden, durch die der Rumpf der Behälter 1 festgehalten werden kann, während ihr Rand 1A von den Rändern der Tragelemente 54 festgehalten werden kann. Wenn die Behälter richtig über den Tragelementen plaziert sind und ihr Boden gegebenenfalls leicht in den Öffnungen 56 festgehalten wird, genügt es, die Arme 92A und 92B auseinanderzuziehen, um die Behälter fallen zu lassen welche sich dann in Bezug auf die Tragelement richtig positionieren, wobei ihre Öffnung nach oben zeigt.

Anstelle der mit Bezug auf die Abbildungen 6 und 8 beschriebenen Vorrichtungen können auch andere Vorrichtungen vorgesehen werden, um die Behälter zu übergeben und wenden. In diesem Sinne sind Vorrichtungen vorstellbar, die eine Führung in pneumatischen Leitungen verwenden.

Bei der in den Abbildungen 1 und 2 dargestellten Einrichtung handelt es sich um eine sogenannte "in-line"-Einrichtung, da die Plättchen und anschließend die Behälter in dieser Einrichtung auf Förderern vorwärtsbewegt werden, die sich selbst wie ein Rollband vorwärtsbewegen.

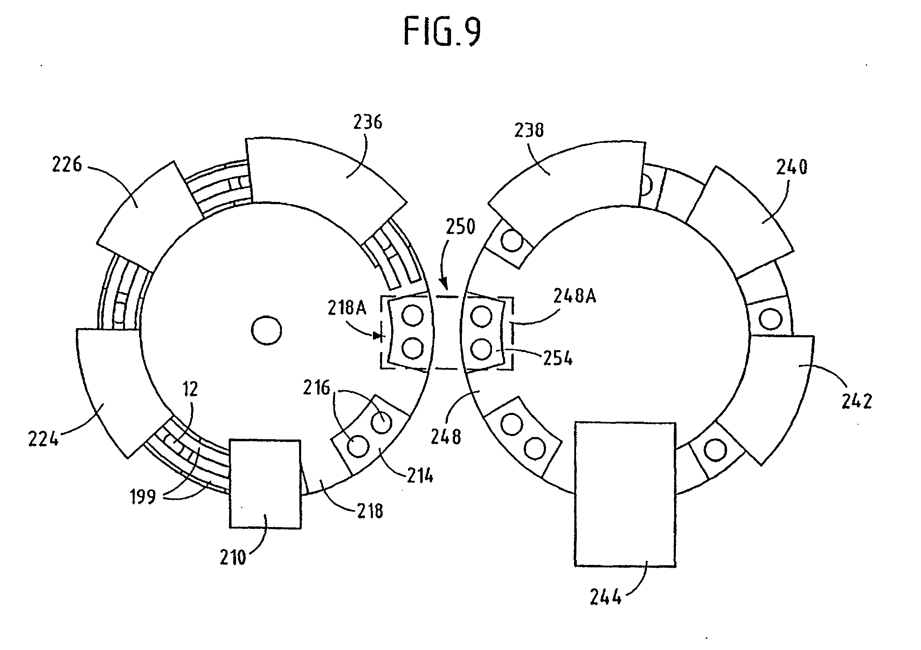

Die Abbildung 9 stellt eine andere, sogenannte Karusselleinrichtung dar. In einer solchen Einrichtung enthalten der Förderer bzw. enthalten die Förderer Platten und werden diese schrittweise drehend weiterbewegt, um von einer Station zur anderen zu gelangen. Diese Art von Einrichtung ist besonders interessant bei relativ geringen Stückzahlen und hat den Vorteil, weniger Platz einzunehmen. In der Abbildung 9 sind dieselben Bezugszeichen wie in den Abbildungen 1 und 2 verwendet, jedoch um 200 erhöht. In diesem Sinne enthält die Einrichtung einen ersten Förderer 218, der mit Tragelementen 214 ausgestattet ist, die an Öffnungen 216 grenzen. Er enthält ebenfalls eine Zuführstation 210, eine Heizstation 224, eine Behälterwarmformstation 226 sowie eine Ummantelungsstation 236, die auf der Bahn des ersten Förderers 218 angeordnet sind. Der Aufbau sowie die Funktionsweise dieser unterschiedlichen Stationen sind analog zu denen, die bereits zuvor unter Bezug auf die Einrichtung der Abbildungen 1 und 2 beschrieben worden sind, nur daß die Stationen dieses Mal nicht Behälter gleichzeitig bearbeitet, die bei jeder Vorwärtsbewegung des Förderers 218 in Reihen angeordnet sind, sondern gleichzeitig Behältergruppen bearbeiten, die am Rand des Förderers zugänglich sind.

Die Tragelemente 214 sind beispielsweise so angeordnet, daß sie zwei Plättchen 12 gleichzeitig aufnehmen. In diesem Sinne entspricht ein Vorschubschritt des Förderers 218 der gleichzeitigen Bearbeitung von zwei Plättchen, die auf einem Tragelement angeordnet sind. In derselben Zeiteinheit bearbeitet die Warmformstation 226 also gleichzeitig zwei Plättchen. Demgegenüber sind die Abmessungen der Heizstation 224 dergestalt, daß diese sich über mehrere Vorschubschritte des Förderers erstreckt und sich beispielsweise zwei Tragelemente 214, die jeweils mit zwei Plättchen bestückt sind, gleichzeitig in dieser Station befinden.

Gleichermaßen kann die Dekorstation 236 im ersten Schritt und in einem Takt Ummantelungen an zwei geformten Behältern anbringen, die sich auf einem Tragelement 214 befinden, und im zweiten Schritt diese beiden Behälter einem Warmluftstrom aussetzen, um das Aufschrumpfen dieser Ummantelungen zu bewirken. In diesem Falle erstreckt sich die Ummantelungsstation 236 folglich über zwei Vorschubschritte des Förderers 218.

Die Einrichtung enthält ebenfalls einen zweiten Förderer 248, auf dem die Behälter mit Hilfe einer Übergabe- und Wendestation 250 übergeben werden, die analog der oben erwähnten Station 50 ist, nur, daß sie nicht Behälter übergibt, die in Querreihen angeordnet sind, sondern Behälter, die am Rand des Förderers angeordnet sind. Im Abgabebereich 218A des ersten Förderers sind z.B. zwei Behälter, die sich auf einem Tragelement 214 befinden, gleichzeitig vorhanden, und die Station 250 wendet diese beiden Behälter und legt sie im Aufgabebereich 248A des zweiten Förderers ab, der selbst mit Tragelementen 254 ausgestattet ist, die dazu geeignet sind, gleichzeitig zwei Behälter aufzunehmen.

Nach der Station 250 befinden sich hintereinander und vor einer Ausgabestation Behälterfüllstationen 238, Stationen 240 zur Positionierung eines Deckels auf dem Rand des Behälters sowie Stationen 242 zum Auf siegeln des Deckels. Zum Beispiel je nachdem, ob man die Behälter mit einem einzigen Produkt oder mit zwei unterschiedlichen Produkten zu befüllen beabsichtigt, kann sich die Station 238 über einen oder zwei Vorschubschritte des zweiten Förderers 248 erstrecken.

Für die Phasen vor dem Wenden und Befüllen der Behälter ist es vorteilhaft, daß die Einrichtung der Abbildungen 1 und 2 oder die Einrichtung der Abbildung 9 mit Führungselementen zwischen den unterschiedlichen Stationen ausgestattet ist, die dazu dienen, die Plättchen und anschließend die geformten Behälter richtig in ihren Tragelementen zu halten. Im Falle der in-line-Einrichtung können diese Führungselemente aus Längsschienen 99 bestehen, die sich zwischen den unterschiedlichen Stationen befinden und so positioniert sind, daß sie die Plättchen 12 teilweise bedecken, oder nach der Warmformstation die nach oben gekehrten Unterseiten der Behälterränder bedecken. Diese Führungselemente 99 werden selbstverständlich in einem sehr geringen Abstand zu den Plättchen und anschließend an deren Ränder positioniert. Im Falle einer karussellförmigen Station können diese Führungselemente aus ringförmigen Schienen 199 bestehen, die sich zwischen den unterschiedlichen Stationen erstrecken und ebenfalls so angeordnet sind, daß sie die Plättchen und anschließend die Behälterränder teilweise bedecken.

Die in der Einrichtung der Erfindung oder zur Umsetzung des Erfindungsverfahrens verwendeten Plättchen werden aus einem thermoplastischen Material hergestellt. Je nachdem, ob man die Behälter einzeln oder in Gruppen zu bearbeiten beabsichtigt, kann jedes Plättchen dazu dienen, einen einzigen Behälter oder eine Gruppe mit mehreren Behältern, z.B. vier Behälter, herzustellen. Im letzteren Fall werden Solltrennlinien, die ein Trennen der Behälter voneinander erlauben, in dem Plättchen zwischen den Bereichen vorgeformt, in denen die Behälter geformt sind, wobei die Trennung zwischen den Deckeln, z.B. während des Aufsiegelns der Deckel, geschehen kann. Die Plättchen verfügen vorzugsweise über eine konstante Dicke. Sie können die Form von Scheiben haben und analog zu Jetons sein oder eine äußere Kontur in Form eines Vierecks mit abgerundeten Ecken aufweisen. Es sind selbstverständlich auch andere Formen möglich. Wenn nur ein Behälter pro Plättchen geformt wird, definiert die Kontur des Plättchens die Kontur des Behälterrandes. Zum Beispiel kann das thermoplastische Material, das zur Formgebung dieser Plättchen verwendet wird, auf der Basis von Polystyrol, Polypropylen oder Terephthalatpolyethylen sein.

## Patentansprüche

1. Einrichtung zur Herstellung von Behältern durch Warmformen, bestehend aus einer Heizstation (24; 224), einer Station (26; 226) zum Warmformen der Behälter, die mindestens eine Warmformbaugruppe enthält, welche aus einem Kolben (30) und einer Kammer besteht (34), die zu einem Warmformwerkzeug (28) respektive zu einem Warmformgegenwerkzeug (32) gehören, wobei der Kolben und die Kammer dieser Baugruppe einander gegenüber angeordnet sind und der Kolben dazu geeignet ist, zwischen einer Warmformposition, in der er in diese Kammer eindringt, und einer Auszugsposition, in der er aus dieser Kammer herausgezogen ist, bewegt zu werden, wobei die Einrichtung darüber hinaus Transportvorrichtungen (18, 48; 218, 248) aufweist, die dazu geeignet sind, schrittweise zwischen den Stationen der Einrichtung fortbewegt zu werden, und die Transportvorrichtungen mindestens einen ersten Förderer (18; 218) umfassen, der Öffnungen (16; 216) aufweist, an deren Rändern sich Tragelemente (14; 214) für Plättchen (12) aus thermoplastischem Material befinden, die Einrichtung weiterhin eine Zuführstation (10; 210) aufweist, die mit Mitteln ausgestattet ist, um Plättchen aus thermoplastischem Material auf diesen Tragelementen und über diesen Öffnungen zu positionieren, die Heizstation (24; 224) Mittel (72) enthält, um die Plättchen während ihres Durchlaufs durch diese Station zu erwärmen und um mindestens einen Zentralbereich (13B) jedes Plättchens (12) auf eine Temperatur zur plastischen Formgebung zu bringen, und die Transportvorrichtungen dazu geeignet sind, eine Öffnung (16; 216) des ersten Förderers (18; 218), die mit einem Plättchen (12) versehen ist, zwischen der Kammer (34) und dem Kolben (30) jeder Warmformbaugruppe zu plazieren, wobei dieser Kolben bewegbar ist, um durch die Öffnung des Förderers hindurchgeführt zu werden und den Zentralbereich (13B) des Plättchens umzuformen, indem er diesen in die Warmformkammer verbringt, und ferner eine Füllstation für die Behälter und Mittel zum Auflegen und Befestigen eines Deckels an der Öffnung jedes Behälters vorgesehen sind, **dadurch gekennzeichnet, daß** das Warmformwerkzeug (28) und das Warmformgegenwerkzeug (32) unterhalb respektive oberhalb der Vorschubbahn der Plättchen in der Warmformstation (26, 226) angeordnet sind, so daß die warmgeformten Behälter (1) bei Austritt aus der Warmformstation mit ihrer Öffnung nach unten weisen, und die Transportvorrichtungen ferner einen zweiten Förderer (48; 248) aufweisen, der die Füllstation (38; 238) und den Bereich der Mittel (40, 42; 240, 242) zum Auflegen und Befestigen eines Deckels auf der Öffnung eines jeden Behälters passiert und auf dem die Öffnungen der Behälter nach oben weisen, wobei Mittel (50, 250) vorgesehen sind, um die Behälter (1) von dem ersten Förderer (18, 218) an den zweiten Förderer (48; 248) zu übergeben und die Behälter bei dieser Übergabe zu wenden.

2. Einrichtung nach Anspruch 1, **dadurch gekennzeichnet, daß** sie eine Übergabe- und Wendestation (50, 250) enthält, die zwischen dem ersten und dem zweiten Förderer (18, 48; 218, 248) angeordnet ist, und so viele Übergabe- und Rückwendevorrichtungen (90) aufweist, wie Behälter im Abgabebereich (18A; 218A) des ersten Förderers (18; 218) bei einem Vorschubschritt vorhanden sind und jede Übergabe- und Wendevorrichtung (90) Greifvorrichtungen (92A, 92B) enthält, die aktivierbar sind, um einen Behälter (1) im Abgabebereich des ersten Förderers zu greifen und umzusetzen (R) und einen gegriffenen Behälter in der Nähe des Aufgabebereichs (28A; 248A) des zweiten Förderers (48; 248) zu übergeben, und schließlich deaktivierbar sind, um die Übernahme des Behälters (1) durch den zweiten Förderer zu ermöglichen.

3. Einrichtung nach Anspruch 2, **dadurch gekennzeichnet, daß** jede Übergabe- und Wendevorrichtung (90) eine Zange sowie Mittel (98) zum Betreiben der Zange aufweist, die gegeneinander bewegbare Arme (92A, 92B) besitzt, um einen Behälter (1) an seiner Seitenwand im Abgabebereich (18A; 218A) des ersten Förderers (18, 218) zu greifen, und die Mittel zum Betreiben der Zange betätigbar sind, um den Behälter zu wenden, so daß dessen Öffnung nach oben weist, und über dem Aufgabebereich (48A; 248A) des zweiten Förderers (48; 248) zu positionieren, wobei die Arme der Zange spreizbar sind, um den Behälter wieder freizugeben.

4. Einrichtung nach einem der Ansprüche 1 bis 3, **dadurch gekennzeichnet, daß** die Tragelemente (14; 214) die sich am Rand der Öffnungen (16; 216) des ersten Förderers (18; 218) befinden, Mittel (14A, 99) enthalten, um die auf ihnen befindlichen Plättchen (12) festzuhalten.

5. Einrichtung nach einem der Ansprüche 1 bis 4, **dadurch gekennzeichnet, daß** die Zuführstation (10, 210) ein Magazin (60) zur Aufnahme mindestens eines Stapels Plättchen (12) und eine Schublade (62) am unteren Ende des Magazins mit einem Aufnahmebereich (63) für das untere Plättchen des Stapels (12A) aufweist, wobei die Schublade zwischen einer eingezogenen Position, in der sich ihr Aufnahmebereich unter dem Stapel befindet, und einer vorgeschobenen Position, in der sich der Aufnahmebereich (63) außerhalb des Magazins (60) befindet, bewegbar ist, und eine Öffnung (64) zwischen der Schublade und einer als Vorderwand bezeichneten Wand (60A) des Magazins vorhanden ist, die sich nach vorn in Richtung (F1) der Bewegung der Schublade zwischen deren eingefahrener und vorgeschobener Position befindet, wobei diese Öffnung (64) nur das untere Plättchen des Stapels passieren läßt, das sich im Aufnahmebereich der Schublade befindet, wenn diese aus ihrer zurückgezogenen Position in ihre vorgeschobene Position bewegt wird, wobei die Zuführstation ferner Vorrichtungen (66) enthält. um das Plättchen, das sich im Aufnahmebereich der Schublade befindet, wenn diese sich in ihrer vorgeschobenen Position befindet, zu greifen und auf einem Tragelement (14, 214) des ersten Förderers (18, 218) abzulegen.

6. Einrichtung nach einem der Ansprüche 1 bis 5, **dadurch gekennzeichnet, daß** die Heizstation (24, 224) Vorrichtungen (74) aufweist, um die Randbereiche (13A) der Plättchen (12) auf einer Temperatur unter der Temperatur zur plastischen Formgebung zu halten.

7. Einrichtung nach Anspruch 6, **dadurch gekennzeichnet, daß** die Heizstation für jedes Plättchen (12) das sich in dieser Station (24; 224) befindet, bei jedem Vorschubschritt des ersten Förderers (18) ein Abdeckorgan (74) aufweist, um einen Randbereich (13A) des entsprechenden Plättchens gegenüber der Heizeinrichtung zu schützen.

8. Einrichtung nach Anspruch 7, **dadurch gekennzeichnet, daß** sie Vorrichtungen (76) enthält, um die Abdeckorgane zu kühlen.

9. Einrichtung nach einem der Ansprüche 1 bis 8, **dadurch gekennzeichnet, daß** sie eine Ummantelungsstation (36; 236) enthält, die sich hinter der Warmformstation (26; 226) befindet und Mittel aufweist, um eine wärmeschrumpfende Ummantelung um jeden Behälter (1) herum anzubringen, sowie Mittel aufweist, um die Temperatur der Ummantelung zu variieren und sie auf diese Weise auf die Behälter zu schrumpfen.

10. Einrichtung nach einem der Ansprüche 1 bis 9, **dadurch gekennzeichnet, daß** sie eine Stempeldruckstation enthält, die sich hinter der Warmformstation befindet und Mittel aufweist, um durch Stempeldruck eine Dekoration auf den Behältern anzubringen.

11. Verfahren zur Herstellung von Behälter (1) durch Warmformen, bei dem eine Phase der Erwärmung und eine Phase des Warmformens der Behälter mit Hilfe von mindestens einer Warmformbaugruppe realisiert wird, die eine Warmformkammer (34) sowie einen Warmformkolben (30) enthält, wobei der Kolben zwischen einer Auszugsposition, in der er aus der Kammer entfernt ist, und einer Warmformposition, in der er in diese Kammer eindringt, bewegt wird und Transportvorrichtungen (18, 48; 218, 248) verwendet werden, die schrittweise fortbewegt werden, indem mindestens ein erster Förderer (18, 48) mit Öffnungen (16; 216) und an deren Rändern angeordneten Tragelementen (14; 214) verwendet wird, Plättchen (12) aus thermoplastischem Material auf diesen Tragelementen und über diesen Öffnungen abgelegt und daraufhin erwärmt werden, um.mindestens einen Zentralbereich (13B) jedes Plättchens auf eine Temperatur zum plastischen Formen zu bringen, indem eine mit einem Plättchen belegte Öffnung (16; 216) des ersten Förderers (18; 218), zwischen die Kammer (34) und den Kolben (30) jeder Warmformbaugruppe eingebracht und der Kolben jeder Warmformbaugruppe durch die entsprechende Öffnung des ersten Förderers hindurchbewegt wird, um das sich an dieser Öffnung befindende Plättchen umzuformen, und in die Warmformkammer einzuführen, und bei dem schließlich eine Phase des Füllens der Behälter vorgesehen wird, **dadurch gekennzeichnet, daß** während der Warmformphase der oder jeder Warmformkolben (30) nach oben bewegt wird und in die entsprechende Warmformkammer (34) eindringt, so daß Behälter (1) mit nach unten weisender Öffnung hergestellt werden und daß zwischen der Warmformphase und der Füllphase eine Phase vorgesehen wird, in der die Behälter gewendet werden, so daß ihre Öffnungen nach oben weisen.

12. Verfahren nach Anspruch 11, **dadurch gekennzeichnet, daß** in einer Zuführphase mindestens ein thermoplastisches Plättchen (12A) aus einer Gruppe von thermoplastischen Plättchen (12B) ausgesondert wird und das oder jedes ausgesonderte Plättchen auf ein Tragelement (14; 214) des ersten Förderers (18; 218) abgelegt wird.

13. Verfahren nach Anspruch 11 oder 12, **dadurch gekennzeichnet, daß** während der Erwärmungsphase Randbereiche (13A) der Plättchen (12) auf einer Temperatur gehalten werden, die unter der Temperatur für das plastische Formen liegt.

14. Verfahren nach einem der Ansprüche 11 bis 13, **dadurch gekennzeichnet, daß** in einer Ummantelungsphase eine wärmeschrumpfende Ummantelung um jeden Behälter herum angebracht wird und die Temperatur der Ummantelungen variiert wird, um sie auf die Behälter aufzuschrumpfen.

15. Verfahren nach einem der Ansprüche 11 bis 14, **dadurch gekennzeichnet, daß** in einer Stempeldruckphase mittels Stempeldruck eine Dekoration auf den Behälter aufgebracht wird.

## Claims

1. Manufacturing installation for manufacturing containers by thermoforming, the installation comprising a heating station (24; 224), a thermoforming station (26; 226) for thermoforming containers including at least one thermoforming assembly which comprises a piston (30) and a chamber (34) respectively pertaining to the thermoforming tool (28) and to a thermoforming counter-tool (32), the piston and the chamber of said assembly being located opposite each other and said piston being apt to be displaced between a thermoforming position in which it penetrates said chamber and a cancellation position in which it is separated from said chamber, the installation further comprising conveying means (18, 48; 218, 248) that are apt to be advanced stepwise between the stations of the installation and that comprise at least one first conveyor (18; 218) having openings (16; 216) that are edged with supports (14; 214) for plates (12) made from thermoplastic material, the installation further including a feed station (10; 210) fitted with means for placing plates made from thermoplastic material onto said supports and across said openings, the heating station (24; 224) including means (72) for heating the plates as they go through said station and for bringing at least one central region (13B) for each plate (12) to a plastic deformation temperature, the conveying means being suitable for placing an opening (16, 216) of said first conveyor (18; 218) provided with a plate (12) between the chamber (34) and the piston (30) of each thermoforming assembly, said piston being apt to be displaced to cross the opening of the conveyor and deform the central region (13B) of the plate by placing it inside the thermoforming chamber, the installation further comprising a filling station for filling the containers and means for applying and fixing a cap across the opening of each container (1),
**characterised in that** the thermoforming tool (28) and the thermoforming counter-tool (32) are respectively placed below and above the advance path of the plates inside the thermoforming station (26, 226) such that the thermoformed containers (1) present an opening directed downwards at the outlet from the thermoforming station, **in that** the conveying means further comprise a second conveyor (48, 248) which goes through the filing station (38, 238) for filling the containers and the region of the means (40, 42; 240, 242) for applying and fixing a cap across the opening of each container, on which second conveyor the openings of the containers are disposed upwards, and **in that** said installation includes means (50, 250) for transferring the containers (1) from the first conveyor (18; 118) to the second conveyor (48; 248) and for tuming over said containers during said transfer.

2. Installation according to claim 1, **characterised in that** it includes a transfer and turning over station (50, 250) disposed between the first and second conveyors (18, 48; 218, 248), this station comprising as many transfer and turning over members (90) as there are containers present in an outlet zone (18A; 218) of the first conveyor (18; 218) at a given advance step, each transfer and tuming over member (90) including gripping means (92A, 92B) likely to be activated for the purpose of seizing a container (1) in the outlet zone of the first conveyor, for being displaced (R) in order to bring a seized container in the vicinity of an inlet zone (48A; 248A) of the second conveyor (48; 248) and further to be deactivated so as to enable said second conveyor to take on the container (1).

3. Installation according to claim 2, **characterised in that** each transfer and turning over member (90) comprises pliers and means (98) for operating said pliers, the latter having arms (92A, 92B) likely to be brought closer to each other in order to seize a container (1) via its side wall in the outlet zone (18A; 218A) of the first conveyor (18; 218), the means for operating the pliers being apt to be actuated so as to turn the container over in order to direct the opening thereof upwards and to place said container above the inlet zone (48A; 248A) of the second conveyor (48; 248), with the pliers' arms then being capable of being separated for the purpose of freeing the container.

4. Installation according to any one of claims 1 to 3, **characterised in that** the supports (14; 214) edging the openings (16; 216) of the first conveyor (18; 218) include means (14A, 99) for wedging the plates (12) disposed on such supports.

5. Installation according to any one of claims 1 to 4, **characterised in that** the feed station (10; 210) comprises a magazine (60) suitable for containing at least one stack of plates (12), the lower end of this magazine being fitted with a drawer (62) having a zone (63) for receiving the lower plate of the stack (12A), the drawer being mobile between a retracted position in which said receiving zone is located below the stack and an advanced position in which the receiving zone (63) is located outside the magazine (60), an opening (64) being defined between the drawer and a so-called front wall (60A) of the magazine located towards the front in the direction (F1) of displacement of the drawer between its retracted position and its advanced position, this opening (64) being suitable for giving way only to the lower plate of the stack which is disposed in the receiving zone for receiving the drawer when the latter is displaced from its retracted position to its advanced position, the feed station further comprising means (66) for seizing the plate disposed in the receiving zone of the drawer when the latter is in its advanced position, and for disposing said plate on a support (14; 214) of the first conveyor (18; 218).

6. Installation according to any one of claims 1 to 5, **characterised in that** the heating station (24; 224) comprises means (74) for maintaining peripheral regions (13A) of the plates (12) at a temperature that is below the plastic deformation temperature.

7. Installation according to claim 6, **characterised in that**, for each plate (12) present in said station (24; 224) at a given advance step of the first conveyor (18), the heating station includes a masking member (74) likely to protect a peripheral region (13A) of the corresponding plate with respect to the means for heating the plates.

8. Installation according to claim 7, **characterised in that** it includes means (76) for cooling the masking members.

9. Installation according to any one of claims 1 to 8, **characterised in that** includes a station for coupling by a sleeve coupling (36; 236) that is located downstream of the thermoforming station (26; 226), said station for coupling by a sleeve coupling comprising means for disposing a thermo-retractable sleeve about each container (1) and means for causing the temperature of the sleeves to vary and thus retract them on the containers.

10. Installation according to any one of claims 1 to 9, **characterised in that** it includes a sealing station located downstream of the thermoforming station and including means for affixing a scenery on the containers by sealing.

11. Method of manufacturing containers (1) by thermoforming, in which method a heating step and a thermoforming step are performed for heating and thermoforming containers using at least one thermoforming assembly comprising a thermoforming chamber (34) and a thermoforming piston (30), the piston being displaced between a cancellation position in which it is separated from the chamber and a thermoforming position in which it penetrates said chamber, which method uses conveying means (18, 48; 218, 248) apt to be advanced stepwise, that use at least one first conveyor (18; 48) having openings (16; 216) edged with supports (14; 214), in which method some plates (12) made from thermoplastic material are placed on said supports and across said openings, the plates are heated to carry at least one central region (13B) of each plate to a plastic deformation temperature, an opening (16, 216) of the first conveyor (18; 218) provided with a plate is placed between the chamber (34) and the piston (30) of each thermoforming assembly, and the piston of each thermoforming assembly being displaced across the corresponding opening of the first conveyor, so as to deform the plate present in said opening and to insert it in the corresponding thermoforming chamber, and a further step for filling the containers is performed,
the method being **characterised in that**, during the thermoforming step, the or each thermoforming piston (30) is displaced upwards and penetrates the corresponding thermoforming chamber (34) so as to perform containers (1) having an opening directed downwards and **in that**, between the thermoforming step and the filling step, a step for turning over the containers is performed so as to direct their openings upwards.

12. Method according to claim 11, **characterised in that** in a feed step at least a thermoplastic plate (12A) is separated from a group of thermoplastic plates (12B) and the or each separated plate is disposed on a support (12; 214) of the first conveyor (18; 218).

13. Method according to claim 11 or 12, **characterised in that**, during the heating step, peripheral regions (13A) of the plates (12) are maintained at a temperature that is below the plastic deformation temperature.

14. Method according to any one of claims 11 to 13, **characterised in that** in a step for coupling by a sleeve coupling, a thermo-retractable sleeve is disposed about each container and the temperature of the sleeves is caused to vary so as to retract them on the containers.

15. Method according to any one of claims 11 to 14, **characterised in that** in a sealing step, a scenery is affixed on the containers by sealing.

## Revendications

1. Installation de fabrication de récipients par thermoformage, comprenant une station de chauffage (24 ; 224), une station de thermoformage (26 ; 226) de récipients comportant au moins un ensemble de thermoformage comprenant un piston (30) et une chambre (34) appartenant respectivement à un outil de thermoformage (28) et à un contre-outil de thermoformage (32), le piston et la chambre dudit ensemble étant situés en regard l'un de l'autre et ledit piston étant susceptible d'être déplacé entre une position de thermoformage dans laquelle il pénètre dans ladite chambre et une position d'effacement dans laquelle il est écarté de cette chambre, l'installation comprenant, en outre, des moyens de convoyage (18, 48 ; 218, 248), qui sont susceptibles d'être avancés pas à pas entre les stations de l'installation et qui comprennent au moins un premier convoyeur (18 ; 218) présentant des ouvertures (16 ; 216) bordées par des supports (14 ; 214) pour des plaquettes (12) de matériau thermoplastique, l'installation comportant, en outre, une station d'alimentation (10 ; 210) équipée de moyens pour placer des plaquettes en matériau thermoplastique sur lesdits supports et en travers desdites ouvertures, la station de chauffage (24 ; 224) comportant des moyens (72) pour chauffer les plaquettes lors de leur passage dans ladite station et pour porter au moins une région centrale (13B) de chaque plaquette (12) à une température de déformation plastique, les moyens de convoyage étant aptes à placer une ouverture (16, 216) dudit premier convoyeur (18 ; 218) munie d'une plaquette (12) entre la chambre (34) et le piston (30) de chaque ensemble de thermoformage, ledit piston étant susceptible d'être déplacé pour traverser l'ouverture du convoyeur et déformer la région centrale (13B) de la plaquette en la plaçant dans la chambre de thermoformage, l'installation comprenant encore une station de remplissage des récipients et des moyens pour poser et fixer un couvercle en travers de l'ouverture de chaque récipient (1),
**caractérisé en ce que** l'outil de thermoformage (28) et le contre-outil de thermoformage (32) sont respectivement placés en dessous et au-dessus du trajet d'avancement des plaquettes dans la station de thermoformage (26, 226), de sorte que les récipients thermoformés (1) présentent une ouverture dirigée vers le bas au sortir de la station de thermoformage, **en ce que** les moyens de convoyage comprennent, en outre, un deuxième convoyeur (48, 248) qui passe dans la station (38, 238) de remplissage des récipients et dans la région des moyens (40, 42 ; 240, 242) pour poser et fixer un couvercle en travers de l'ouverture de chaque récipient, deuxième convoyeur sur lequel les ouvertures des récipients sont disposées vers le haut, et **en ce qu'**elle comporte des moyens (50, 250) pour transférer les récipients (1) du premier convoyeur (18 ; 118) au deuxième convoyeur (48 ; 248) et pour retourner lesdits récipients lors de ce transfert.

2. Installation selon la revendication 1, **caractérisée en ce qu'**elle comporte une station de transfert et de retournement (50, 250) disposée entre les premier et deuxième convoyeurs (18, 48 ; 218, 248), cette station comprenant autant d'organes de transfert et de retournement (90) qu'il y a de récipients présents dans une zone de sortie (18A ; 218A) du premier convoyeur (18 ; 218) à un pas d'avancement donné, chaque organe de transfert et de retournement (90) comportant des moyens de préhension (92A, 92B) susceptibles d'être activés pour saisir un récipient (1) dans la zone de sortie du premier convoyeur, pour être déplacés (R) et amener un récipient saisi au voisinage d'une zone d'entrée (48A ; 248A) du deuxième convoyeur (48 ; 248) et d'être désactivés pour permettre ensuite la prise en charge du récipient (1) par ledit deuxième convoyeur.

3. Installation selon la revendication 2, **caractérisée en ce que** chaque organe de transfert et de retournement (90) comprend une pince et des moyens (98) pour manoeuvrer cette pince, cette dernière ayant des bras (92A, 92B) susceptibles d'être rapprochés pour saisir un récipient (1) par sa paroi latérale dans la zone de sortie (18A ; 218A) du premier convoyeur (18 ; 218), les moyens pour manoeuvrer la pince étant susceptibles d'être actionnés pour retourner le récipient de manière à diriger l'ouverture de ce dernier vers le haut et pour placer ledit récipient au-dessus de la zone d'entrée (48A ; 248A) du deuxième convoyeur (48 ; 248), les bras de la pince étant alors susceptibles d'être écartés pour libérer le récipient.

4. Installation selon l'une quelconque des revendications 1 à 3, **caractérisée en ce que** les supports (14 ; 214) bordant les ouvertures (16 ; 216) du premier convoyeur (18 ; 218) comportent des moyens (14A, 99) pour caler les plaquettes (12) disposées sur ces supports.

5. Installation selon l'une quelconque des revendications 1 à 4, **caractérisée en ce que** la station d'alimentation (10 ; 210) comprend un magasin (60) apte à contenir au moins une pile de plaquettes (12), l'extrémité inférieure de ce magasin étant équipée d'un tiroir (62) présentant une zone de réception (63) pour la plaquette inférieure de la pile (12A), le tiroir étant mobile entre une position rétractée dans laquelle ladite zone de réception est située sous la pile et une position avancée dans laquelle la zone de réception (63) se trouve en dehors du magasin (60), une ouverture (64) étant délimitée entre le tiroir et une paroi (60A) du magasin, dite « paroi avant » située vers l'avant dans le sens (F1) de déplacement du tiroir entre sa position rétractée et sa position avancée, cette ouverture (64) étant apte à laisser passer seulement la plaquette inférieure de la pile disposée dans la zone de réception du tiroir lorsque ce dernier est déplacé de sa position rétractée à sa position avancée, la station d'alimentation comprenant, en outre, des moyens (66) pour saisir la plaquette disposée dans la zone de réception du tiroir lorsque ce dernier occupe sa position avancée, et pour disposer ladite plaquette sur un support (14 ; 214) du premier convoyeur (18 ; 218).

6. Installation selon l'une quelconque des revendications 1 à 5, **caractérisée en ce que** la station de chauffage (24, 224) comporte des moyens (74) pour maintenir des régions périphériques (13A) des plaquettes (12) à une température inférieure à la température de déformation plastique.

7. Installation selon la revendication 6, **caractérisée en ce que**, pour chaque plaquette (12) présente dans ladite station (24 ; 224) à un pas d'avancement donné du premier convoyeur (18), la station de chauffage comporte un organe de masquage (74) susceptible de protéger une région périphérique (13A) de la plaquette correspondante vis-à-vis des moyens pour chauffer les plaquettes.

8. Installation selon la revendication 7, **caractérisée en ce qu'**elle comporte des moyens (76) pour refroidir les organes de masquage.

9. Installation selon l'une quelconque des revendications 1 à 8, **caractérisée en ce qu'**elle comporte une station de manchonnage (36 ; 236) située en aval de la station de thermoformage (26 ; 226), ladite station de manchonnage comprenant des moyens pour disposer un manchon thermo-rétractable autour de chaque récipient (1) et des moyens pour faire varier la température des manchons et les rétracter ainsi sur les récipients.

10. Installation selon l'une quelconque des revendications 1 à 8, **caractérisée en ce qu'**elle comporte une station de tampographie, située en aval de la station de thermoformage et comportant des moyens pour apposer un décor sur les récipients par tampographie.

11. Procédé de fabrication de récipients (1) par thermoformage, dans lequel on réalise une étape de chauffage et une étape de thermoformage de récipients à l'aide d'au moins un ensemble de thermoformage comprenant une chambre de thermoformage (34) et un piston de thermoformage (30), le piston étant déplacé entre une position d'effacement dans laquelle il est écarté de la chambre et une position de thermoformage dans laquelle il pénètre dans ladite chambre, procédé dans lequel on utilise des moyens de convoyage (18, 48 ; 218, 248) susceptibles d'être avancés pas à pas, en utilisant au moins un premier convoyeur (18 ; 48) présentant des ouvertures (16 ; 216) bordées par des supports (14 ; 214), procédé dans lequel on place des plaquettes (12) de matériau thermoplastique sur ces supports et en travers de ces ouvertures, on chauffe les plaquettes pour porter au moins une région centrale (13B) de chaque plaquette à une température de déformation plastique, on place une ouverture (16, 216) du premier convoyeur (18 ; 218) munie d'une plaquette entre la chambre (34) et le piston (30) de chaque ensemble de thermoformage, on réalise l'étape de thermoformage en déplaçant le piston de chaque ensemble de thermoformage à travers l'ouverture correspondante du premier convoyeur, pour déformer la plaquette présente dans cette ouverture et l'introduire dans la chambre de thermoformage correspondante, et on réalise, en outre, une étape de remplissage des récipients,
**caractérisé en ce que**, lors de l'étape de thermoformage, on déplace le ou chaque piston de thermoformage (30) vers le haut et pénètre dans la chambre de thermoformage (34) correspondante de manière à réaliser des récipients (1) présentant une ouverture dirigée vers le bas et **en ce que**, entre l'étape de thermoformage et l'étape de remplissage, on réalise une étape de retournement des récipients, de manière à diriger leurs ouvertures vers le haut.

12. Procédé selon la revendication 11, **caractérisé en ce que**, dans une étape d'alimentation, on sépare au moins une plaquette thermoplastique (12A) d'un groupe de plaquettes thermoplastiques (12B) et on dispose la ou chaque plaquette séparée sur un support (14 ; 214) du premier convoyeur (18 ; 218).

13. Procédé selon la revendication 11 ou 12, **caractérisé en ce que**, lors de l'étape de chauffage, on maintient des régions périphériques (13A) des plaquettes (12) à une température inférieure à la température de déformation plastique.

14. Procédé selon l'une quelconque des revendications 11 à 13, **caractérisé en ce que**, dans une étape de manchonnage, on dispose un manchon thermo-rétractable autour de chaque récipient et on fait varier la température des manchons pour les rétracter sur les récipients.

15. Procédé selon l'une quelconque des revendications 11 à 13, **caractérisé en ce que**, dans une étape de tampographie, on appose un décor sur les récipients par tampographie.
